# EUROPEAN PATENT APPLICATION

(11) **EP 4 625 639 A1**
(43) Date of publication of application: **01.10.2025**
(21) Application number: 24202919.7
(22) Date of filing: 26.09.2024
(51) Int. Cl.: H01M 50/184, H01M 50/152, H01M 50/186, H01M 50/559, H01M 50/566, H01M 50/636, H01M 50/645

(54) **TERMINAL ASSEMBLY OF BATTERY CELL, BATTERY CELL, BATTERY ASSEMBLY, AND ELECTRIC DEVICE**

(30) Priority: 27.03.2024 CN 202410371309
(71) Applicant: BYD Company Limited, Shenzhen, Guangdong 518118 (CN)
(72) Inventor: Liu, Yanchu, Shenzhen, 518118 (CN); Chen, Jiankang, Shenzhen, 518118 (CN); Mu, Xiaowen, Shenzhen, 518118 (CN); Ma, Zhiying, Shenzhen, 518118 (CN); Wang, Yadong, Shenzhen, 518118 (CN)
(74) Representative: Mathys & Squire

(57) **Abstract**

The present disclosure discloses a terminal assembly of a battery cell, a battery cell, a battery assembly, and an electrical device. The terminal assembly of the battery cell includes a terminal. An electrolyte solution filling channel (211) is provided in the terminal. The electrolyte solution filling channel has an electrolyte solution outlet. The terminal includes a protruding portion (212). The protruding portion is arranged around the electrolyte solution outlet. A blocking channel in communication with the electrolyte solution filling channel is formed in the protruding portion. Thus an electrolyte solution in the battery cell can be prevented from reversely flowing into the electrolyte solution filling channel through the electrolyte solution outlet to some extent. This ensures electrolyte solution filling performance of the terminal assembly, and therefore improves operation performance of the battery cell.

## Description

### FIELD

The present disclosure relates to the field of battery technologies, and in particular, to a terminal assembly of a battery cell, a battery cell, a battery assembly, and an electric device.

### BACKGROUND

In the related art, an electrolyte solution filling port is usually provided on a terminal of a terminal assembly of a battery cell, to facilitate electrolyte solution filling toward the electrode core after the battery cell is assembled.

However, in the related art, a bottom plate of the terminal is usually arranged to be as thin as possible to support penetration welding between the terminal and a collecting pan, and the electrolyte solution filling port is provided on the bottom plate. Consequently, an electrolyte solution is likely to reversely flow through the electrolyte solution filling port to cause electrolyte solution leakage, affecting operation performance of the battery cell.

### SUMMARY

The present disclosure is intended to resolve at least one of technical problems existing in the related art. In view of this, a first objective of the present disclosure is to provide a terminal assembly of a battery cell. The terminal assembly can prevent an electrolyte solution from reversely flow through an electrolyte solution filling port to some extent, so as to ensure electrolyte solution filling effect. This resolves a technical problem in the related art that an electrolyte solution is likely to reversely flow through an electrolyte solution filling port.

A second objective of the present disclosure is to provide a battery cell having the terminal assembly.

A third objective of the present disclosure is to provide a battery assembly having the battery cell.

A fourth objective of the present disclosure is to provide an electric device having the battery assembly.

A terminal assembly of a battery cell according to embodiments of the present disclosure includes: a terminal, an electrolyte solution filling channel being provided in the terminal, the electrolyte solution filling channel having an electrolyte solution outlet, the terminal including a protruding portion, the protruding portion being arranged around the electrolyte solution outlet, and a blocking channel in communication with the electrolyte solution filling channel being formed in the protruding portion.

In the terminal assembly of the battery cell according to the embodiments of the present disclosure, the protruding portion is arranged around the electrolyte solution outlet, and the blocking channel in communication with the electrolyte solution filling channel is formed in the protruding portion, so that the protruding portion can be used to extend a flow path of an electrolyte solution that enters the electrolyte solution filling channel through the electrolyte solution outlet. This prevents an electrolyte solution from reversely flowing into the electrolyte solution filling channel through the electrolyte solution outlet to some extent, so as to avoid electrolyte solution leakage, ensure electrolyte solution filling effect of the terminal assembly, and improve operation performance of the battery cell.

In some embodiments, the terminal has a bottom plate and a side plate, the side plate is connected to a side of the bottom plate in a thickness direction and extends along a circumferential direction of the bottom plate to define the electrolyte solution filling channel, at least part of the bottom plate directly faces the electrolyte solution filling channel, both the electrolyte solution outlet and the protruding portion are provided on the bottom plate, and the bottom plate is adapted to electrically connect to an electrode core.

In some embodiments, the protruding portion is arranged on a first end surface that is of the bottom plate and that is away from the electrolyte solution filling channel.

In some embodiments, the protruding portion protrudes in a direction away from the electrolyte solution filling channel, and a protrusion height of the protruding portion ranges from 0.75 mm to 2 mm; and/or a minimum thickness of the bottom plate ranges from 0.2 mm to 0.8 mm.

In some embodiments, a minimum diameter of the electrolyte solution outlet and/or the blocking channel ranges from 1 mm to 6 mm.

In some embodiments, the bottom plate has a second end surface facing the electrolyte solution filling channel, and a transition chamfer is provided between the electrolyte solution outlet and the second end surface.

In some embodiments, the transition chamfer is a straight chamfer, an axial width of the straight chamfer ranges from 0.1 mm to 0.8 mm, and a radial width of the straight chamfer ranges from 0.05 mm to 0.8 mm.

In some embodiments, the transition chamfer is a round chamfer, and a radius of the round chamfer ranges from 0.05 mm to 0.8 mm.

In some embodiments, the terminal assembly further includes a sealing nail, and the sealing nail is arranged at the electrolyte solution outlet to block the electrolyte solution outlet.

In some embodiments, the terminal assembly further includes a sealing cover, and the sealing cover is arranged at an end that is of the side plate and that is away from the bottom plate to block an inlet of the electrolyte solution filling channel.

In some embodiments, the sealing cover includes a body and a connection protrusion, the body is matched with the terminal through welding to block the inlet, a welding seam is formed at a joint between the body and the terminal, the connection protrusion is arranged on a third end surface that is of the body and that is away from the electrolyte solution filling channel along a thickness direction, the connection protrusion is adapted to connect to a busbar, and a protrusion height of the connection protrusion is greater than or equal to a maximum height of a part that is of the welding seam and that protrudes out of the third end surface.

In some embodiments, along the thickness direction of the body, the connection protrusion protrudes in a direction away from the electrolyte solution filling channel and protrudes out of the terminal.

In some embodiments, the body includes a blocking portion and a lap portion that are connected to each other, the blocking portion is located in the electrolyte solution filling channel, the lap portion is arranged at a periphery of at least part of the blocking portion, and the lap portion is arranged on an end surface of the terminal and is welded to the terminal. Along the thickness direction of the sealing cover, a part of an orthographic projection of the connection protrusion coincides with an orthographic projection of the lap portion.

In some embodiments, a thickness of the lap portion ranges from 0.3 mm to 1 mm.

In some embodiments, a thickness of the blocking portion is greater than the protrusion height of the connection protrusion.

In some embodiments, a groove is provided on an inner wall of the electrolyte solution filling channel, the groove extends to an end surface of the terminal, a support surface is formed on a side wall of the groove, the body is supported on the support surface, and the outer peripheral wall of the body is welded to an inner peripheral wall of the groove.

In some embodiments, the third end surface protrudes out of the end surface of the terminal.

In some embodiments, a spacing between the third end surface and the end surface of the terminal ranges from 0.05 mm to 1 mm.

In some embodiments, a first chamfer is provided between the groove and the end surface of the terminal, a second chamfer is provided between the outer peripheral wall of the body and the third end surface, the first chamfer and the second chamfer are provided spaced away, and solder is arranged between the first chamfer and the second chamfer.

A battery cell according to embodiments of the present disclosure includes: a housing, an accommodating cavity with an opening being formed in the housing; an electrode core, the electrode core being arranged in the accommodating cavity and having a tab; a terminal assembly, the terminal assembly being the foregoing terminal assembly, and the terminal assembly being arranged at the opening; and a collecting pan, the collecting pan being arranged between the electrode core and the terminal assembly and being electrically connected to the tab and the terminal assembly separately.

In the battery cell according to the embodiments of the present disclosure, the foregoing terminal assembly is used, to ensure operation performance of the battery cell.

In some embodiments, the battery cell is a cylindrical battery.

A battery assembly according to embodiments of the present disclosure includes multiple battery cells.

In the battery assembly according to the embodiments of the present disclosure, the foregoing battery cell is used, to ensure operation performance of the battery assembly.

An electric device according to embodiments of the present disclosure includes the foregoing battery assembly.

In the electric device according to the embodiments of the present disclosure, the foregoing battery assembly is used, to ensure operation performance of the electric device.

Additional aspects and advantages of the present disclosure become clear in the following descriptions or are learned from practice of the present disclosure.

### BRIEF DESCRIPTION OF THE DRAWINGS

The foregoing and/or other aspects and advantages of the present disclosure become clear and readily appreciated from the following descriptions made with reference to the drawings.
FIG. 1 is a partial cross-sectional view of a battery cell according to some embodiments of a first aspect of the present disclosure;
FIG. 2 is a schematic diagram of a terminal according to some embodiments of the present disclosure;
FIG. 3 is a cross-sectional view of a terminal according to some embodiments of the present disclosure;
FIG. 4 is a cross-sectional view of a terminal according to some other embodiments of the present disclosure;
FIG. 5 is a cross-sectional view of a sealing cover according to some embodiments of the first aspect of the present disclosure;
FIG. 6 is a partial cross-sectional view of a battery cell connected to a busbar according to some embodiments of the first aspect of the present disclosure;
FIG. 7 is a partial cross-sectional view of a battery cell according to some embodiments of a second aspect of the present disclosure;
FIG. 8 is a locally enlarged view of a region I in FIG. 7;
FIG. 9 is a schematic diagram of a sealing cover according to some embodiments of the second aspect of the present disclosure;
FIG. 10 is a cross-sectional view of a sealing cover according to some embodiments of the second aspect of the present disclosure;
FIG. 11 is a schematic diagram of a sealing cover according to some embodiments of a third aspect of the present disclosure;
FIG. 12 is a cross-sectional view of a sealing cover according to some embodiments of the third aspect of the present disclosure;
FIG. 13 is a partial cross-sectional view of a battery cell according to some embodiments of the third aspect of the present disclosure;
FIG. 14 is a schematic diagram of a battery cell according to some embodiments of the present disclosure;
FIG. 15 is an exploded view of a battery cell according to some embodiments of the present disclosure;
FIG. 16 is a schematic diagram of a collecting pan according to some embodiments of the present disclosure;
FIG. 17 is a schematic diagram of a collecting pan matched with a negative electrode cover plate according to some other embodiments of the present disclosure, where the collecting pan is in an unfolded state; and
FIG. 18 is a schematic diagram of a collecting pan according to some other embodiments of the present disclosure, where the collecting pan is in a folding state.

In the drawings:
1000: battery cell; 200: terminal assembly; 250: terminal; 211: electrolyte solution filling channel; 2111: groove; 2112: support surface; 2113: bottom plate; 2114: electrolyte solution outlet; 2115: first end surface; 2116: second end surface; 2117: transition chamfer; 2118: inlet; 2119: side plate; 212: protruding portion; 2121: blocking channel; 213: first chamfer; 251: end surface; 220: sealing nail; 230: sealing cover; 231: body; 2311: third end surface; 2312: blocking portion; 2313: lap portion; 232: connection protrusion; 235: second chamfer; 234: fourth end surface; 2341: thinning groove; 210: cover plate; 260: negative electrode cover plate; 270: top spacer; 290: welding seam; 400: insulating member; 430: insulating piece; 440: sealing ring; 500: buffer member; 800: protection piece; 100: collecting pan; 110: first connection piece; 120: second connection piece; 122: identification region; 130: intermediate member; 140: pan body; 300: housing; 320: electrode core; and 2000: busbar.

### DETAILED DESCRIPTION

Detail description of the embodiments of present invention will be made in the following, and examples thereof are illustrated in the drawings, throughout which identical or similar elements or elements of identical or similar functions are represented with identical or similar reference numerals. The embodiments that are described with reference to the accompanying drawings are exemplary, and are only used to interpret the present invention, instead limiting the present invention.

In the descriptions of the present disclosure, it should be understood that orientation or position relationships indicated by the terms "center", "longitudinal", "transverse", "length", "width", "thickness", "on", "below", "front", "back", "left", "right", "vertical", "horizontal", "top", "bottom", "inside", "outside", "clockwise", "counterclockwise", "axial", "radial", "circumferential", and the like are based on orientation or position relationships shown in the drawings, and are merely intended for ease and brevity of description of the present disclosure, rather than indicating or implying that an indicated device or component needs to have a specific orientation or needs to be constructed and operated in a specific orientation. Therefore, such terms should not be construed as a limitation on the present disclosure.

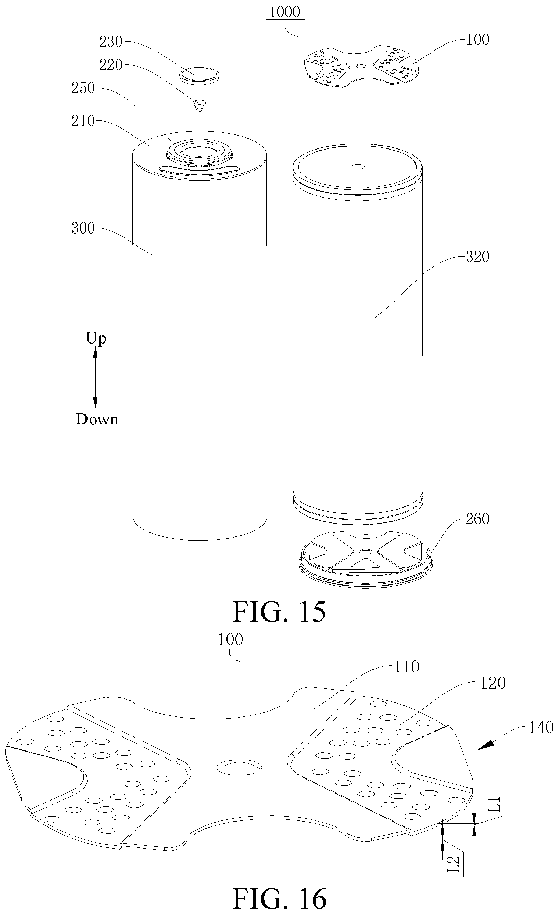

It should be noted that, in the related art, a terminal 250 usually needs to be welded to a collecting pan 100 (for a specific structure of the collecting pan 100, see FIG. 15) through penetration welding to ensure operation performance of terminal 250, and a bottom plate 2113 of the terminal 250 further needs to be arranged to be as thin as possible to ensure welding effect of penetration welding. However, when an electrolyte solution outlet 2114 of an electrolyte solution filling channel 211 is provided on the thin bottom plate 2113, an electrolyte solution is likely to reversely flow into the electrolyte solution filling channel 211 through the electrolyte solution outlet 2114 to cause electrolyte solution leakage. This affects electrolyte solution filling effect for a battery cell 1000 and degrades operation performance of the battery cell 1000.

To resolve the foregoing problems, the present disclosure provides a terminal assembly 200 of a battery cell 1000.

A terminal assembly 200 of a battery cell 1000 according to embodiments of the present disclosure is described below with reference to the drawings.

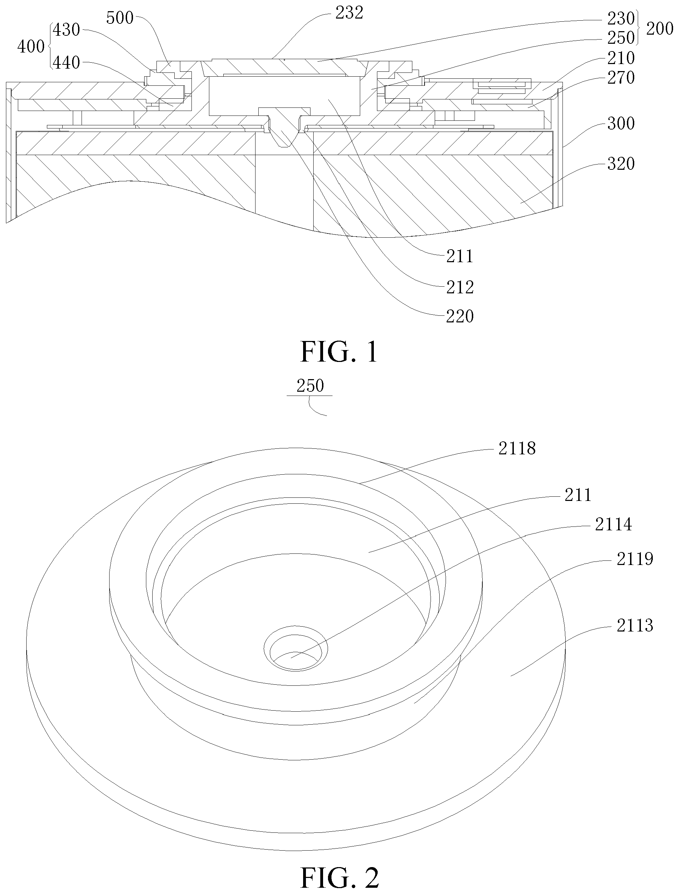

As shown in FIG. 1, a terminal assembly 200 of a battery cell 1000 according to embodiments of the present disclosure includes a terminal 250.

As shown in FIG. 1, FIG. 2, and FIG. 3, an electrolyte solution filling channel 211 is provided in the terminal 250, the electrolyte solution filling channel 211 has an electrolyte solution outlet 2114, the terminal 250 includes a protruding portion 212, the protruding portion 212 is arranged around the electrolyte solution outlet 2114, and a blocking channel 2121 in communication with the electrolyte solution filling channel 211 is formed in the protruding portion 212.

It should be noted that the electrolyte solution filling channel 211 being provided with the electrolyte solution outlet 2114 can ensure that an electrolyte solution following into the electrolyte solution filling channel 211 can be smoothly discharge. This facilitates electrolyte solution filling toward an electrode core 320 (for a specific structure of the electrode core 320, see FIG. 1 and FIG. 15), and reduces difficulty of electrolyte solution filling.

In addition, the terminal 250 is arranged to include the protruding portion 212 arranged around the electrolyte solution outlet 2114, and the blocking channel 2121 in communication with the electrolyte solution filling channel 211 is formed in the protruding portion 212. In this way, when an electrolyte solution enters the electrolyte solution filling channel 211 through the electrolyte solution outlet 2114, the electrolyte solution needs to flow through the blocking channel 2121. The blocking channel 2121 has a specific extension length, and therefore can extend a flow path of the electrolyte solution that enters the electrolyte solution filling channel 211 through the electrolyte solution outlet 2114. This can prevent an electrolyte solution from reversely flowing into the electrolyte solution filling channel 211 through the electrolyte solution outlet 2114 to some extent, so as to avoid electrolyte solution leakage and ensure operation performance of the battery cell 1000.

In some embodiments, the terminal 250 is arranged as a hollow member for defining the electrolyte solution filling channel 211. This reduces difficulty of molding the electrolyte solution filling channel 211.

It can be learned from the foregoing structure that, in the terminal assembly 200 of the battery cell 1000 according to the embodiments of the present disclosure, the protruding portion 212 is arranged around the electrolyte solution outlet 2114, and the blocking channel 2121 in communication with the electrolyte solution filling channel 211 is formed in the protruding portion 212. This resolves, to some extent, a problem that an electrolyte solution is likely to reversely flow into the electrolyte solution filling channel 211 through the electrolyte solution outlet 2114, thereby improving electrolyte solution filling effect of the terminal assembly 200 and ensuring operation performance of the battery cell 1000.

It can be understood that, compared with the related art, in the present disclosure, an electrolyte solution can be prevented from reversely flowing into the electrolyte solution filling channel 211 through the electrolyte solution outlet 2114 to some extent.

In some embodiments, as shown in FIG. 2, the terminal 250 has a bottom plate 2113 and a side plate 2119, the side plate 2119 is connected to a side of the bottom plate 2113 in a thickness direction and extends along a circumferential direction of the bottom plate 2113 to define the electrolyte solution filling channel 211, at least part of the bottom plate 2113 directly faces the electrolyte solution filling channel 211, both the electrolyte solution outlet 2114 and the protruding portion 212 are provided on the bottom plate 2113, and the bottom plate 2113 is adapted to electrically connect to the electrode core 320. The terminal 250 is arranged to include the bottom plate 2113 and the side plate 2119, and the bottom plate 2113 is matched with the side plate 2119 to define the electrolyte solution filling channel 211. This reduces difficulty of molding the electrolyte solution filling channel 211, and therefore reduces difficulty of electrolyte solution filling for the battery cell 1000. At least part of the bottom plate 2113 directly faces the electrolyte solution filling channel 211, and both the electrolyte solution outlet 2114 and the protruding portion 212 are provided on the bottom plate 2113, so that communication between the electrolyte solution outlet 2114 and the electrolyte solution filling channel 211 can be ensured, and the protruding portion 212 can be arranged around the electrolyte solution outlet 2114. In this way, the protruding portion 212 can be used to extend a flow path of an electrolyte solution that enters the electrolyte solution filling channel 211 through the electrolyte solution outlet 2114. This prevents an electrolyte solution from reversely flowing into the electrolyte solution filling channel 211 through the electrolyte solution outlet 2114 to some extent, so as to avoid electrolyte solution leakage and ensure operation performance of the battery cell 1000.

In addition, the bottom plate 2113 is electrically connected to the electrode core 320 to implement an electrical connection between the terminal 250 and the electrode core 320. This facilitates lead-out of a current of the electrode core 320 through the terminal 250, to ensure operation performance of the electrode core 320 and reduce difficulty of electrically connecting the terminal 250 to the electrode core 320.

It should be noted that, in the present disclosure, because reverse flowing of an electrolyte solution can be resolved by using the protruding portion 212, a thickness of the bottom plate 2113 can be adaptively reduced to make the bottom plate 2113 as thin as possible, so as to reduce difficulty of electrically connecting the terminal 250 to the electrode core 320, ensure connection quality, and further ensure operation performance of the terminal 250.

To be specific, in the present disclosure, the protruding portion 212 is arranged around the electrolyte solution outlet 2114, and the blocking channel 2121 in communication with the electrolyte solution filling channel 211 is formed in the protruding portion 212. This prevents an electrolyte solution from reversely flowing into the electrolyte solution filling channel 211 through the electrolyte solution outlet 2114, and can further help reduce the thickness of the bottom plate 2113 of the terminal 250, so as to reduce difficulty of electrically connecting the terminal 250 to the electrode core 320, ensure connection quality, and further ensure operation performance of the terminal 250.

In some embodiments, a collecting pan 100 (for a specific structure of the collecting pan 100, refer to FIG. 15) is arranged between the bottom plate 2113 and the electrode core 320, and the collecting pan 100 is welded to the bottom plate 2113 and the electrode core 320 separately, to implement an electrical connection between the bottom plate 2113 and the electrode core 320. This reduces difficulty of electrically connecting the bottom plate 2113 to the electrode core 320.

Therefore, in the present disclosure, after the thickness of the bottom plate 2113 of the terminal 250 is reduced, difficulty of welding the terminal 250 to the collecting pan 100 can be reduced, and welding quality is ensured, so as to ensure quality of a connection between the bottom plate 2113 and the electrode core 320 and improve operation performance of the terminal 250.

Optionally, the terminal 250 is made of an aluminum material, the aluminum material is connected to the collecting pan 100, and the collecting pan 100 is connected to the electrode core 320, to implement an electrical connection between the terminal 250 and the electrode core 320. This facilitates lead-out of a current of the electrode core 320 through the terminal 250, to ensure operation performance of the electrode core 320.

In some embodiments, the terminal 250 is molded through heading, to reduce difficulty of molding the terminal 250.

In some embodiments, as shown in FIG. 1, FIG. 3, and FIG. 4, the protruding portion 212 is arranged on a first end surface 2115 that is of the bottom plate 2113 and that is away from the electrolyte solution filling channel 211. This means that the bottom plate 2113 has the first end surface 2115 away from the electrolyte solution filling channel 211, and the protruding portion 212 is arranged on the first end surface 2115. In this way, the protruding portion 212 can be used to extend a flow path of an electrolyte solution that enters the electrolyte solution filling channel 211 through the electrolyte solution outlet 2114. In addition, the electrolyte solution filling channel 211 can protrude in a direction toward the electrode core 320, to guide an electrolyte solution flowing through the electrolyte solution filling channel 211, so that the electrolyte solution can effectively flow in a direction toward the electrode core 320. This ensures electrolyte solution filling effect, and therefore ensures operation performance of the electrode core 320.

To be specific, in the present disclosure, the protruding portion 212 can not only prevent an electrolyte solution from reversely flowing through the electrolyte solution outlet 2114, but also provide guidance for a flow direction of an electrolyte solution to ensure electrolyte solution filling effect.

In addition, the arrangement of the protruding portion 212 can further improve material loading in a material feeding region. This ensures that a partial structure of the terminal 250 is deformable along the protrusion direction of the protruding portion 212 during processing and molding of the terminal 250, so as to reduce difficulty of processing the terminal 250 and improve processing feasibility of the terminal 250.

It should be further noted that, in the present disclosure, the electrolyte solution filling channel 211 is defined in the terminal 250, and the protruding portion 212 is arranged on the first end surface 2115 that is of the bottom plate 2113 and that is away from the electrolyte solution filling channel 211. This can ensure that the electrolyte solution outlet 2114 of the electrolyte solution filling channel 211 can be provided directly facing a winding hole of the electrode core 320 when the electrode core 320 is formed into a cylindrical shape, to further ensure electrolyte solution filling effect.

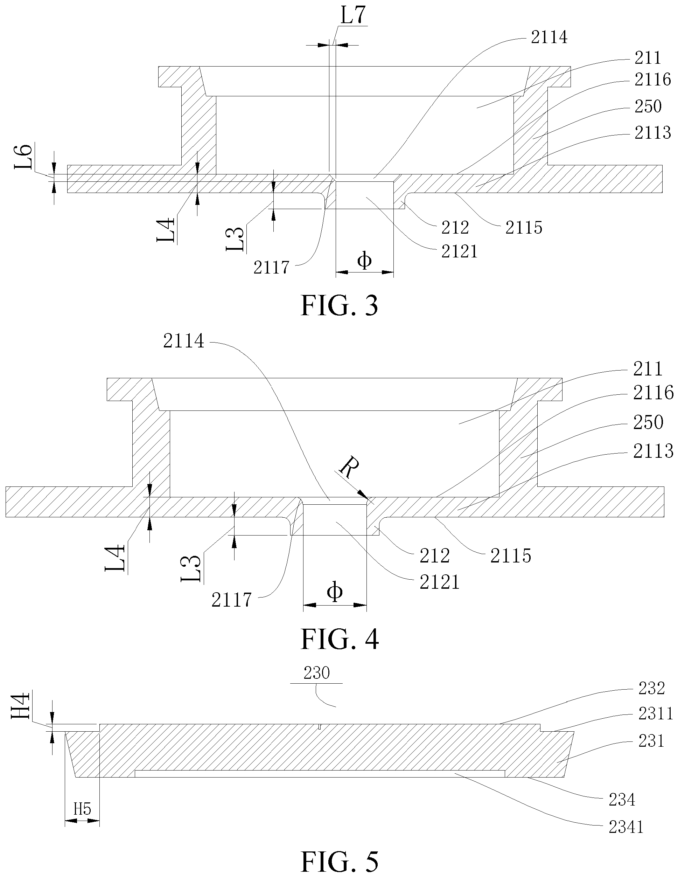

In some embodiments, as shown in FIG. 1, FIG. 3, and FIG. 4, the protruding portion 212 protrudes in a direction away from the electrolyte solution filling channel 211, and a protrusion height of the protruding portion 212 ranges from 0.75 mm to 2 mm. The protrusion height of the protruding portion 212 herein may be understood as L3 shown in FIG. 3 and FIG. 4. When the protrusion height of the protruding portion 212 is small, an extension length of the blocking channel 2121 is shortened, and consequently, flow guiding effect of the protruding portion 212 is affected, and an electrolyte solution is likely to reversely flow into the electrolyte solution filling channel 211 through the electrolyte solution outlet 2114. When the protrusion height of the protruding portion 212 is large, a thickness of the terminal assembly 200 increases, and consequently, difficulty of assembling the terminal assembly 200 increases. In addition, during sealing of the electrolyte solution outlet 2114, a contact area between a sealing member and the protruding portion 212 increases, and consequently, friction increases, and difficulty of sealing by the sealing member increases.

Therefore, in the present disclosure, the protrusion height L3 of the protruding portion 212 is set to range from 0.75 mm to 2 mm. This ensures flow guiding effect of the protruding portion 212 and prevents an electrolyte solution from reversely flowing into the electrolyte solution filling channel 211 through the electrolyte solution outlet 2114, and can further reduce a thickness of the terminal assembly 200, to reduce difficulty of assembling the terminal assembly 200 and reduce difficulty of sealing the electrolyte solution outlet 2114.

In a specific example, the protrusion height of the protruding portion 212 is 0.75 mm, 1 mm, 1.5 mm, 2 mm, or the like.

Optionally, a minimum thickness of the bottom plate 2113 ranges from 0.2 mm to 0.8 mm. The minimum thickness of the bottom plate 2113 herein may be understood as L4 shown in FIG. 3 and FIG. 4. When the minimum thickness of the bottom plate 2113 is small, structural strength of the bottom plate 2113 is reduced, and operation performance of the bottom plate 2113 is affected. When the minimum thickness of the bottom plate 2113 is large, difficulty of welding the terminal 250 to the collecting pan 100 increases, and welding quality is degraded.

Therefore, in the present disclosure, the minimum thickness of the bottom plate 2113 is set to range from 0.2 mm to 0.8 mm. This ensures structural strength of the bottom plate 2113, and can further reduce difficulty of welding the terminal 250 to the collecting pan 100, ensure welding quality, and improve yield of welding between the terminal 250 and the collecting pan 100.

In a specific example, the minimum thickness of the bottom plate 2113 is 0.2 mm, 0.3 mm, 0.4 mm, 0.5 mm, 0.6 mm, 0.7 mm, 0.8 mm, or the like.

In some embodiments, a minimum diameter of the electrolyte solution outlet 2114 and/or the blocking channel 2121 ranges from 1 mm to 6 mm. This means that a minimum diameter of the electrolyte solution outlet 2114 ranges from 1 mm to 6 mm, a minimum diameter of the blocking channel 2121 ranges from 1 mm to 6 mm, or minimum diameters of the electrolyte solution outlet 2114 and the blocking channel 2121 range from 1 mm to 6 mm. The minimum diameters of the electrolyte solution outlet 2114 and the blocking channel 2121 may be understood as φ shown in FIG. 3 and FIG. 4. When the minimum diameter of the electrolyte solution outlet 2114 and/or the blocking channel 2121 is small, an electrolyte solution output amount of the electrolyte solution outlet 2114 is affected, and consequently, electrolyte solution filling effect is affected. When the minimum diameter of the electrolyte solution outlet 2114 and/or the blocking channel 2121 is large, an area of the bottom plate 2113 is reduced because the electrolyte solution outlet 2114 is provided on the bottom plate 2113. Consequently, a welding area between the terminal 250 and the collecting pan 100 is reduced, welding quality is degraded, and a discharge capacity of the collecting pan 100 may be further affected.

Therefore, in the present disclosure, the minimum diameter of the electrolyte solution outlet 2114 and/or the blocking channel 2121 is set to range from 1 mm to 6 mm. This ensures an electrolyte solution output amount of the electrolyte solution outlet 2114 and improves electrolyte solution filling effect, and can further ensure an area of the bottom plate 2113, so as to ensure a welding area between the terminal 250 and the collecting pan 100, improve welding quality, and increase a discharge capacity of the collecting pan 100.

In a specific example, the minimum diameter of the electrolyte solution outlet 2114 is 1 mm, 2 mm, 3 mm, 4 mm, 5 mm, 6 mm, or the like, and the minimum diameter of the blocking channel 2121 is 1 mm, 2 mm, 3 mm, 4 mm, 5 mm, 6 mm, or the like.

In some embodiments, as shown in FIG. 3 and FIG. 4, the bottom plate 2113 has a second end surface 2116 facing the electrolyte solution filling channel 211, and a transition chamfer 2117 is provided between the electrolyte solution outlet 2114 and the second end surface 2116. The transition chamfer 2117 can reduce resistance of the second end surface 2116 to an electrolyte solution, to ensure that an electrolyte solution in the electrolyte solution filling channel 211 can effectively flow toward the electrolyte solution outlet 2114 to ensure electrolyte solution filling effect. In addition, the transition chamfer 2117 can further provide direction guidance for a sealing member (for example, a sealing nail 220 below) for sealing the electrolyte solution outlet 2114, to ensure that the sealing member can be smoothly inserted into the electrolyte solution outlet 2114. Further, this can avoid scratching between the sealing member and a corner between the electrolyte solution outlet 2114 and the second end surface 2116 during sealing, so as to avoid appearance of dust and foreign objects and ensure sealing effect.

In some embodiments, as shown in FIG. 3, the transition chamfer 2117 is a straight chamfer, an axial width of the straight chamfer ranges from 0.1 mm to 0.8 mm, and a radial width of the straight chamfer ranges from 0.05 mm to 0.8 mm. The axial width of the straight chamfer herein may be understood as L6 shown in FIG. 3, and the radial width of the straight chamfer herein may be understood as L7 shown in FIG. 3. When the axial width and the radial width of the straight chamfer are small, flow guiding effect of the transition chamfer 2117 is degraded, and scratching occurs between the sealing member and the corner between the electrolyte solution outlet 2114 and the second end surface 2116 during sealing by the sealing member. When the axial width and the radial width of the straight chamfer are large, an area of the second end surface 2116 is reduced, and a discharge area of the terminal 250 is affected.

Therefore, in the present disclosure, the axial width of the straight chamfer is set to range from 0.1 mm to 0.8 mm, and the radial width of the straight chamfer is set to range from 0.05 mm to 0.8 mm. This ensures flow guiding effect of the transition chamfer 2117 and avoids scratching between the sealing member and the corner between the electrolyte solution outlet 2114 and the second end surface 2116 during sealing by the sealing member, and can further ensure an area of the second end surface 2116, so as to ensure a discharge area of the terminal 250.

In a specific example, the axial width of the straight chamfer is 0.1 mm, 0.2 mm, 0.3 mm, 0.4 mm, 0.5 mm, 0.6 mm, 0.7 mm, 0.8 mm, or the like, and the radial width of the straight chamfer is 0.05 mm, 0.1 mm, 0.2 mm, 0.3 mm, 0.4 mm, 0.5 mm, 0.6 mm, 0.7 mm, 0.8 mm, or the like.

In some embodiments, as shown in FIG. 4, the transition chamfer 2117 is a round chamfer, and a radius of the round chamfer ranges from 0.05 mm to 0.8 mm. The radius of the round chamfer herein may be understood as R shown in FIG. 4. When the radius of the round chamfer is small, flow guiding effect of the transition chamfer 2117 is degraded, and scratching occurs between the sealing member and the corner between the electrolyte solution outlet 2114 and the second end surface 2116 during sealing by the sealing member. When the radius of the round chamfer is large, an area of the second end surface 2116 is reduced, and a discharge area of the terminal 250 is affected.

Therefore, in the present disclosure, the radius of the round chamfer is set to range from 0.05 mm to 0.8 mm. This ensures flow guiding effect of the transition chamfer 2117 and avoids scratching between the sealing member and the corner between the electrolyte solution outlet 2114 and the second end surface 2116 during sealing by the sealing member, and can further ensure an area of the second end surface 2116, so as to ensure a discharge area of the terminal 250.

In a specific example, the radius of the round chamfer is 0.05 mm, 0.1 mm, 0.2 mm, 0.3 mm, 0.4 mm, 0.5 mm, 0.6 mm, 0.7 mm, 0.8 mm, or the like.

In some embodiments, as shown in FIG. 1, the terminal assembly 200 further includes the sealing nail 220, and the sealing nail 220 is arranged at the electrolyte solution outlet 2114 to block the electrolyte solution outlet 2114. This prevents an external foreign object from entering the battery cell 1000 through the electrolyte solution outlet 2114 of the electrolyte solution filling channel 211, and also prevents an electrolyte solution in the battery cell 1000 from reversely flowing into the electrolyte solution filling channel 211 through the electrolyte solution outlet 2114 of the electrolyte solution filling channel 211, so as to ensure operation performance of the battery cell 1000.

In some embodiments, the sealing nail 220 is molded through injection molding and blocks the electrolyte solution outlet 2114 of the electrolyte solution filling channel 211 to block the electrolyte solution filling channel 211. This can further reduce difficulty of molding the sealing nail 220.

In a specific example, after electrolyte solution filling through the electrolyte solution filling channel 211 is completed, the sealing nail 220 may be used to block the electrolyte solution outlet 2114 of the electrolyte solution filling channel 211 to seal the electrolyte solution filling channel 211.

It should be noted that, in the present disclosure, the protruding portion 212 arranged around the electrolyte solution outlet 2114 can further provide direction guidance for the sealing nail 220 during sealing by the sealing nail 220, to reduce difficulty of sealing. In addition, the protruding portion 212 can be further used to increase a contact area between the electrolyte solution outlet 2114 and the sealing nail 220 to ensure sealing effect.

To sum up, in the present disclosure, with the protruding portion 212 arranged around the electrolyte solution outlet 2114, in a first aspect, an electrolyte solution can be prevented from reversely flowing into the electrolyte solution filling channel 211 through the electrolyte solution outlet 2114 to some extent, so as to avoid electrolyte solution leakage and ensure operation performance of the battery cell 1000; in a second aspect, the thickness of the bottom plate 2113 can be reduced to reduce difficulty of welding the terminal 250 to the collecting pan 100 and ensure welding quality and welding yield; in a third aspect, direction guidance can be provided for an electrolyte solution and the sealing nail 220 to ensure electrolyte solution filling effect and reduce difficulty of sealing by the sealing nail 220; and in a fourth aspect, a contact area between the sealing nail 220 and the terminal 250 can be further increased to ensure sealing effect of the sealing nail 220.

In some embodiments, as shown in FIG. 1 and FIG. 2, the terminal assembly 200 further includes a sealing cover 230, and the sealing cover 230 is arranged at an end that is of the side plate 2119 and that is away from the bottom plate 2113 to block an inlet 2118 of the electrolyte solution filling channel 211. To be specific, in the present disclosure, the sealing nail 220 is arranged to seal the electrolyte solution outlet 2114 of the electrolyte solution filling channel 211, and the sealing cover 230 may be further arranged to seal the inlet 2118 of the electrolyte solution filling channel 211, so as to effectively ensure sealing effect for the electrolyte solution filling channel 211. This prevents an external foreign object from entering the battery cell 1000 through the inlet 2118 of the electrolyte solution filling channel 211, and can further prevent an electrolyte solution in the battery cell 1000 from overflowing through the inlet 2118 of the electrolyte solution filling channel 211, so as to ensure operation performance of the battery cell 1000.

In some embodiments, the sealing cover 230 is molded through stamping, to reduce difficulty of molding the sealing cover 230.

In a specific example, after electrolyte solution filling through the electrolyte solution filling channel 211 is completed, the sealing nail 220 may be first used to block the electrolyte solution outlet 2114 of the electrolyte solution filling channel 211, and then the sealing cover 230 is welded to the inlet 2118 of the electrolyte solution filling channel 211 through laser, to seal the electrolyte solution filling channel 211.

In addition, because the electrolyte solution outlet 2114 of the electrolyte solution filling channel 211 is blocked by the sealing nail 220, welding slag can be further prevented from falling into the electrode core 320 during welding of the sealing cover 230, so as to avoid risks such as a short circuit of the electrode core 320.

In some embodiments, as shown in FIG. 2, FIG. 3 and FIG. 4, the electrolyte solution outlet 2114 and the inlet 2118 of the electrolyte solution filling channel 211 are provided on two opposite sides of the electrolyte solution filling channel 211 respectively. Moreover, after the terminal assembly 200 and the electrode core 320 are assembled, the electrolyte solution outlet 2114 is provided near the electrode core 320, and the inlet 2118 is provided on a side that is of the electrolyte solution filling channel 211 and that is away from the electrode core 320. This facilitates electrolyte solution filling toward the electrode core 320 through the electrolyte solution filling channel 211, to ensure operation performance of the electrode core 320.

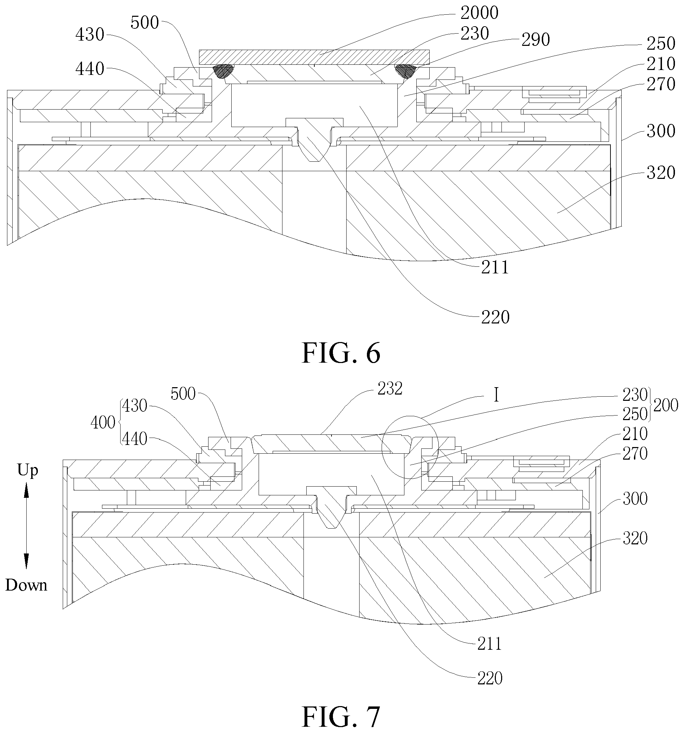

In some embodiments, as shown in FIG. 1, FIG. 5 and FIG. 6, the sealing cover 230 includes a body 231 and a connection protrusion 232. The body 231 is matched with the terminal 250 through welding to block the inlet 2118. A welding seam 290 is formed at a joint between the body 231 and the terminal 250. The connection protrusion 232 is arranged on a third end surface 2311 that is of the body 231 and that is away from the electrolyte solution filling channel 211 along a thickness direction. The connection protrusion 232 is adapted to connect to a busbar 2000. A protrusion height of the connection protrusion 232 is greater than or equal to a maximum height of a part that is of the welding seam 290 and that protrudes out of the third end surface 2311. This means that the welding seam 290 is formed at the joint between the body 231 and the terminal 250 when the body 231 is matched with the terminal 250 through welding to block the inlet 2118 of the electrolyte solution filling channel 211. In addition, the body 231 has the third end surface 2311 away from the electrolyte solution filling channel 211 along the thickness direction (the thickness direction herein may also be understood as an up-down direction shown in FIG. 7) of the body 231, the connection protrusion 232 is arranged on the third end surface 2311, and the protrusion height of the connection protrusion 232 (the protrusion height of the connection protrusion 232 may be understood as H4 shown in FIG. 5) is greater than or equal to the maximum height of the part that is of the welding seam 290 and that protrudes out of the third end surface 2311. This prevents the welding seam 290 from protruding out of the connection protrusion 232 along the thickness direction of the body 231. In this way, when the connection protrusion 232 is connected to the busbar 2000, the welding seam 290 can be prevented from affecting the connection between the connection protrusion 232 and the busbar 2000, to ensure quality and stability of a connection between the sealing cover 230 and the busbar 2000 and improve welding yield of the busbar 2000.

It should be noted that the protrusion height of the connection protrusion 232 being greater than or equal to the maximum height of the part that is of the welding seam 290 and that protrudes out of the third end surface 2311 means that the welding seam 290 is formed at the joint between the body 231 and the terminal 250 during connection between the body 231 and the terminal 250, a part of the welding seam 290 protrudes out of the third end surface 2311, multiple heights by which the welding seam 290 protrudes out of the third end surface 2311 are possible, and a maximum height is less than the protrusion height of the connection protrusion 232. In this way, during connection between the connection protrusion 232 and the busbar 2000, the welding seam 290 can be prevented from hindering contact between the busbar 2000 and the connection protrusion 232, to ensure a contact area between the connection protrusion 232 and the busbar 2000. This ensures quality and stability of a connection between the sealing cover 230 and the busbar 2000, and improves welding yield of the busbar 2000.

To be specific, in the present disclosure, the connection protrusion 232 is arranged on the sealing cover 230, and the protrusion height of the connection protrusion 232 is set to be greater than or equal to the maximum height of the part that is of the welding seam 290 and that protrudes out of the third end surface 2311, to effectively ensure quality and stability of a connection between the sealing cover 230 and the busbar 2000.

In some embodiments, the sealing cover 230 and terminal 250 are sealed through laser welding, to block the electrolyte solution filling channel 211 by using the sealing cover 230.

To sum up, in the present disclosure, a structure of the sealing cover 230 is creatively designed to ensure a contact area between the sealing cover 230 and the busbar 2000, so as to ensure quality and stability of a connection between the sealing cover 230 and the busbar 2000 and improve welding yield of the busbar 2000.

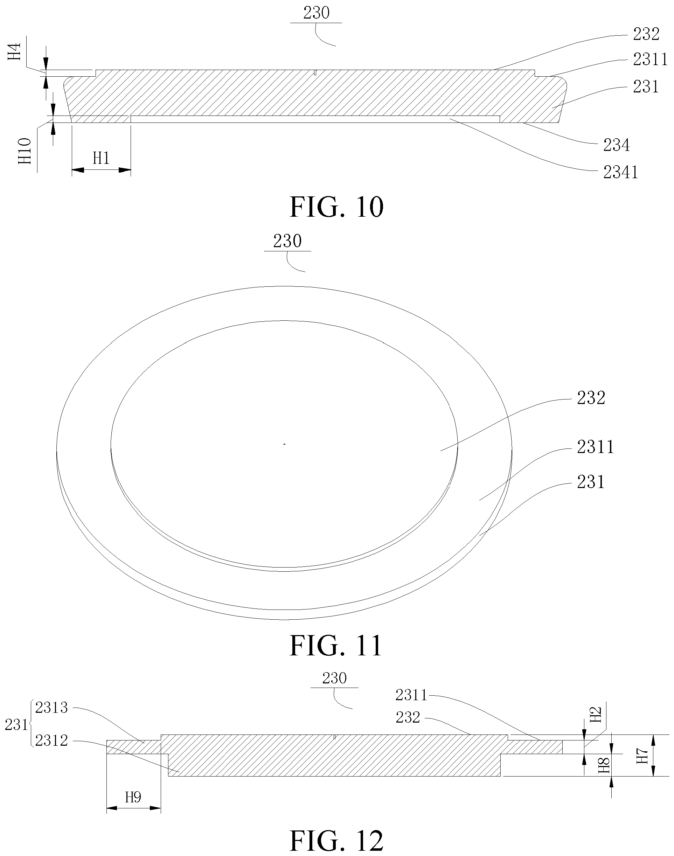

Optionally, the protrusion height of the connection protrusion 232 is greater than or equal to a welding reinforcement height between the sealing cover 230 and the terminal 250. The protrusion height of the connection protrusion 232 herein may be understood as H4 shown in FIG. 5 and FIG. 10. The welding reinforcement height is a height of a part that is of a welding seam material and that protrudes out of the body 231 and the terminal 250 after the sealing cover 230 is welded to the terminal 250. The protrusion height of the connection protrusion 232 is set to be greater than or equal to the welding reinforcement height between the sealing cover 230 and the terminal 250, so that the welding reinforcement height can be prevented from protruding out of the connection protrusion 232. This prevents the welding reinforcement height between the sealing cover 230 and the terminal 250 from affecting a connection between the connection protrusion 232 and the busbar 2000, to further ensure quality of the connection between the connection protrusion 232 and the busbar 2000 and improve welding yield of the busbar 2000.

Therefore, the foregoing descriptions may also be understood as follows: In the present disclosure, the connection protrusion 232 is arranged on the sealing cover 230, and the protrusion height of the connection protrusion 232 is set to be greater than or equal to the welding reinforcement height between the sealing cover 230 and the terminal 250, to prevent the welding reinforcement height arising during welding between the sealing cover 230 and the terminal 250 from affecting welding between the busbar 2000 and the sealing cover 230. This resolves a technical problem in the related art that the welding reinforcement height between the sealing cover 230 and the terminal 250 affects yield of welding between the busbar 2000 and the sealing cover 230, and therefore improves welding yield of the busbar 2000, helps ensure effect of welding between battery cells 1000, and improves operation performance of a battery assembly.

In some embodiments, when the sealing cover 230 and the terminal 250 are formed into aluminum mechanical parts, the protrusion height H4 of the connection protrusion 232 is greater than or equal to 0.05 mm; or when the sealing cover 230 and the terminal 250 are formed into steel mechanical parts, the protrusion height H4 of the connection protrusion 232 is greater than 0 mm, to ensure that the protrusion height of the connection protrusion 232 can be greater than or equal to the welding reinforcement height between the sealing cover 230 and the terminal 250. This resolves a technical problem in the related art that the welding reinforcement height between the sealing cover 230 and the terminal 250 affects yield of welding between the busbar 2000 and the sealing cover 230.

In some embodiments, as shown in FIG. 1, FIG. 7 and FIG. 8, along the thickness direction of the body 231, the connection protrusion 232 protrudes in a direction away from the electrolyte solution filling channel 211 and protrudes out of the terminal 250. In this way, a connection surface of the connection protrusion 232 can be formed on an axial outer side of the terminal 250. This prevents the terminal 250 from affecting a connection between the connection protrusion 232 and the busbar 2000 and reduces difficulty of connecting the sealing cover 230 to the busbar 2000, and can further ensure quality of the connection between the connection protrusion 232 to the busbar 2000 and improve welding yield of the busbar 2000.

In some embodiments, as shown in FIG. 7, FIG. 9 and FIG. 10, the body 231 is provided with a fourth end surface 234 facing the electrolyte solution filling channel 211 along the thickness direction, orthographic projections of the fourth end surface 234 and the connection protrusion 232 along the thickness direction of the sealing cover 230 at least partially overlap, and a thinning groove 2341 at least partly directly facing the connection protrusion 232 is arranged on the fourth end surface 234. This may also be understood as that the sealing cover 230 has both the third end surface 2311 and the fourth end surface 234, and the fourth end surface 234 is provided facing the electrolyte solution filling channel 211, so that the third end surface 2311 and the fourth end surface 234 are provided opposite to each other along the thickness direction of the body 231. In addition, orthographic projections of the fourth end surface 234 and the connection protrusion 232 along the thickness direction of the body 231 at least partially overlap, so that at least part of the fourth end surface 234 is provided directly facing the connection protrusion 232 along the thickness direction of the body 231. In this way, when the thinning groove 2341 is provided on the fourth end surface 234, it can be ensured that at least part of the thinning groove 2341 is provided directly facing the connection protrusion 232. The foregoing arrangement can prevent a thickness of the sealing cover 230 from being excessively large due to the arrangement of the connection protrusion 232. This reduces costs of producing the sealing cover 230, and can further reduce structural strength of the sealing cover 230 and ensure that the sealing cover 230 is deformable under the action of an external force. In this way, during connection between the sealing cover 230 and the terminal 250, deformation of the sealing cover 230 can be controlled to reduce a matching gap between the sealing cover 230 and the terminal 250, so as to improve field of welding between the sealing cover 230 and the terminal 250 and ensure welding quality.

To be specific, in the present disclosure, the connection protrusion 232 is arranged on the third end surface 2311 of the sealing cover 230, the thinning groove 2341 is provided on the fourth end surface 234 of the sealing cover 230, and at least part of the thinning groove 2341 is provided directly facing the connection protrusion 232 along the thickness direction of the sealing cover 230, to absorb welding deformation of the sealing cover 230 and ensure quality of welding between the sealing cover 230 and the terminal 250.

In the descriptions of the present disclosure, a feature defined by "first", "second", "third", or "fourth" may explicitly or implicitly include one or more features. The terms are intended to distinguish between features without indicating an order or importance.

In some embodiments, a groove depth of the thinning groove 2341 is greater than or equal to the protrusion height of the connection protrusion 232. The groove depth of the thinning groove 2341 herein may be understood as H10 shown in FIG. 10. The groove depth of the thinning groove 2341 is set to be greater than or equal to the protrusion height of the connection protrusion 232, to effectively ensure thinning effect of the thinning groove 2341 and prevent a thickness of the sealing cover 230 from being excessively large due to the arrangement of the connection protrusion 232. This ensures that the sealing cover 230 is deformable under the action of an external force, and helps control deformation of the sealing cover 230 to reduce a matching gap between the sealing cover 230 and the terminal 250.

In some embodiments, the groove depth of the thinning groove 2341 is equal to the protrusion height of the connection protrusion 232. This ensures thinning effect of the thinning groove 2341, and can further avoid excessive degradation of structural strength of the sealing cover 230 due to the arrangement of the thinning groove 2341. In other words, this ensures that the sealing cover 230 has specific structural strength, so as to ensure sealing quality of the sealing cover 230.

In some embodiments, as shown in FIG. 10, the thinning groove 2341 is provided spaced away from an outer peripheral wall of the body 231, and a minimum spacing ranges from 0.8 mm to 3.6 mm. The minimum spacing herein means that multiple spacings between the thinning groove 2341 and the outer peripheral wall of the body 231 are possible, and a shortest spacing between the thinning groove 2341 and the outer peripheral wall of the body 231 is defined as the minimum spacing. The minimum spacing between the thinning groove 2341 and the outer peripheral wall of the body 231 may be understood as H1 shown in FIG. 10. When the minimum spacing between the thinning groove 2341 and the outer peripheral wall of the body 231 is excessively small, structural strength of the sealing cover 230 is reduced, and sealing effect of the sealing cover 230 is affected. In addition, a structure between the thinning groove 2341 and the outer peripheral wall of the body 231 is likely to be damaged during processing of the thinning groove 2341, and difficulty of molding the sealing cover 230 increases. When the minimum spacing between the thinning groove 2341 and the outer peripheral wall of the body 231 is excessively large, thinning effect of the thinning groove 2341 is degraded.

Therefore, in the present disclosure, the minimum spacing between the thinning groove 2341 and the outer peripheral wall of the body 231 is set to range from 0.8 mm to 3.6 mm. This ensures thinning effect of the thinning groove 2341, and can further reduce difficulty of molding the sealing cover 230, ensure structural strength of the sealing cover 230, and improve sealing effect of the sealing cover 230.

In some embodiments, the minimum spacing between the thinning groove 2341 and the outer peripheral wall of the body 231 is 0.8 mm, 1 mm, 1.5 mm, 2 mm, 2.5 mm, 3 mm, 3.6 mm, or the like.

In some embodiments, as shown in FIG. 11, FIG. 12 and FIG. 13, the body 231 includes a blocking portion 2312 and a lap portion 2313 that are connected to each other, the blocking portion 2312 is located in the electrolyte solution filling channel 211, the lap portion 2313 is arranged at a periphery of at least part of the blocking portion 2312, and the lap portion 2313 is arranged on an end surface 251 of the terminal 250 and is welded to the terminal 250. The end surface 251 of the terminal 250 herein may be understood as an end surface that is of the terminal 250 and that is away from the electrode core 320 along a thickness direction of the terminal 250, or may be understood as a top surface of the terminal 250, or an end surface that is of the terminal 250 and that surrounds the electrolyte solution inlet of the electrolyte solution filling channel 211. The lap portion 2313 is arranged on the end surface 251 of the terminal 250 and is welded to the terminal 250, so that the sealing cover 230 is matched with the terminal 250 through welding. Because the lap portion 2313 is arranged at a periphery of at least part of the blocking portion 2312, the blocking portion 2312 can be arranged directly facing the electrolyte solution filling channel 211 after the lap portion 2313 is properly connected to the end surface 251 of the terminal 250. In this way, the blocking portion 2312 can be used to block the electrolyte solution filling channel 211, to prevent an external foreign object from entering the battery cell 1000 through the electrolyte solution filling channel 211 and also prevent an electrolyte solution in the battery cell 1000 from overflowing through the electrolyte solution filling channel 211, so as to ensure operation performance of the battery cell 1000.

In addition, the body 231 is arranged to include the blocking portion 2312 and the lap portion 2313, so that a single step can be formed at the top of the terminal 250 during processing of the terminal 250, to improve processing feasibility of the terminal 250 and reduce processing costs.

Optionally, the lap portion 2313 is connected to the terminal 250 through penetration welding to reduce difficulty of assembling the sealing cover 230 and the terminal 250, so as to improve manufacturing yield of the battery cell 1000.

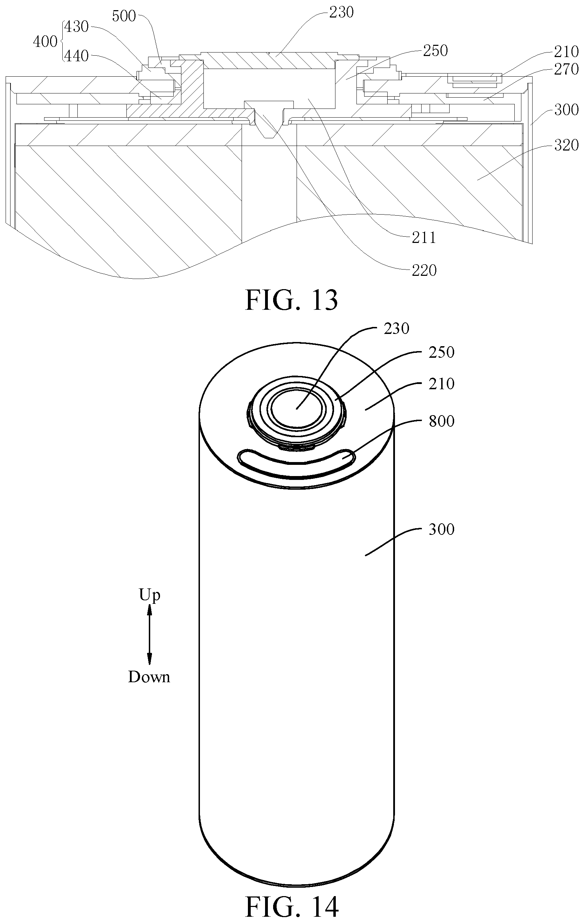

In some embodiments, as shown in FIG. 12 and FIG. 13, along a thickness direction of the blocking portion 2312, the lap portion 2313 is arranged near an end that is of the blocking portion 2312 and that is away from the electrolyte solution filling channel 211, and is connected to a periphery of at least part of the blocking portion 2312, so that the blocking portion 2312 is connected to and matched with the lap portion 2313. This also ensures that the blocking portion 2312 can block the electrolyte solution filling channel 211 after the lap portion 2313 is properly connected to the end surface 251 of the terminal 250.

Optionally, as shown in FIG. 12, along the thickness direction of the sealing cover 230, a part of an orthographic projection of the connection protrusion 232 coincides with an orthographic projection of the lap portion 2313, so that at least part of the connection protrusion 232 is connected to the lap portion 2313. In this way, the sealing cover 230 can be connected to the busbar 2000 through the connection protrusion 232, and structural strength of the lap portion 2313 can be further improved by using the connection protrusion 232, so that the sealing cover 230 can be matched with the terminal 250 through welding by using the lap portion 2313. This reduces difficulty of assembling the sealing cover 230 and the terminal 250, and improves quality of a connection between the sealing cover 230 and the terminal 250.

In some embodiments, as shown in FIG. 12, the connection protrusion 232 is arranged spaced away from an outer peripheral wall of the lap portion 2313 along a radial direction of the sealing cover 230. This can ensure a width of the lap portion 2313 and therefore ensure quality of welding between the connection protrusion 232 and the lap portion 2313. In addition, this can further prevent the welding seam 290 from being formed on the connection protrusion 232 during welding between the lap portion 2313 and the terminal 250, to prevent the welding seam 290 from affecting a connection between the connection protrusion 232 and the busbar 2000. This helps ensure quality and stability of a connection between the sealing cover 230 and the busbar 2000, and improves welding yield of the busbar 2000.

In some embodiments, a minimum spacing between the connection protrusion 232 and the outer peripheral wall of the lap portion 2313 is greater than or equal to a welding width-of-fusion between the lap portion 2313 to the terminal 250 and is less than a radius of the body 231. The minimum spacing herein means that multiple spacings between the connection protrusion 232 and the outer peripheral wall of the lap portion 2313 are possible, and a shortest spacing between the connection protrusion 232 and the outer peripheral wall of the lap portion 2313 is defined as the minimum spacing. The minimum spacing between the connection protrusion 232 and the outer peripheral wall of the lap portion 2313 may be understood as H9 shown in FIG. 12. The welding width-of-fusion is a width of a melting region of the welding seam 290 during welding between the lap portion 2313 and the terminal 250. Because the lap portion 2313 is connected to the terminal 250 through penetration welding, the foregoing arrangement ensures quality of welding between the lap portion 2313 and the terminal 250 and prevents the welding seam 290 from being formed on the connection protrusion 232 during welding between the lap portion 2313 and the terminal 250, and can further ensure a width of the connection protrusion 232, so as to ensure quality of a connection between the sealing cover 230 and the busbar 2000.

In some embodiments, a thickness of the lap portion 2313 ranges from 0.3 mm to 1 mm. The thickness of the lap portion 2313 herein may be understood as H2 shown in FIG. 12. When the thickness of the lap portion 2313 is small, structural strength of the lap portion 2313 is reduced, and operation performance of the lap portion 2313 is affected. When the thickness of the lap portion 2313 is large, penetration welding cannot be performed between the lap portion 2313 and the terminal 250, and consequently, welding yield of the terminal 250 is reduced.

Therefore, in the present disclosure, the thickness of the lap portion 2313 is set to range from 0.3 mm to 1 mm. This ensures structural strength of the lap portion 2313, and further facilitates penetration welding between the lap portion 2313 and the terminal 250, thereby ensuring welding efficiency and ensuring welding yield of the terminal 250.

In some embodiments, the thickness of the lap portion 2313 is 0.3 mm, 0.5 mm, 0.8 mm, 1 mm, or the like.

In some embodiments, as shown in FIG. 12, a thickness of the blocking portion 2312 is greater than the protrusion height of the connection protrusion 232. The thickness of the blocking portion 2312 herein may be understood as H8 shown in FIG. 12. The thickness of the blocking portion 2312 is set to be greater than the protrusion height of the connection protrusion 232, so that a contact area between the blocking portion 2312 and the electrolyte solution filling channel 211 can be increased to ensure blocking effect of the blocking portion 2312, and an overall height of the sealing cover 230 can be further ensured to avoid penetration of the sealing cover 230 during welding between the connection protrusion 232 and the busbar 2000. This ensures sealing effect of the sealing cover 230, and can further prevent welding slag from flowing into the electrolyte solution filling channel 211 during welding between the connection protrusion 232 and the busbar 2000.

In some embodiments, the overall height H7 of the sealing cover 230 ranges from 0.8 mm to 5 mm. When the overall height of the sealing cover 230 is small, sealing effect of the sealing cover 230 is degraded, and a risk of penetrating the sealing cover 230 during welding between the connection protrusion 232 and the busbar 2000 also exists. When the overall height H7 of the sealing cover 230 is large, space occupied by the sealing cover 230 increases, costs of manufacturing the sealing cover 230 increase, and difficulty of assembling the sealing cover 230 and the electrolyte solution filling channel 211 also increases.

Therefore, in the present disclosure, the overall height H7 of the sealing cover 230 is set to range from 0.8 mm to 5 mm. This ensures sealing effect of the sealing cover 230, and can further avoid welding slag, poor appearance, and the like caused by penetration of the sealing cover 230 during welding between the connection protrusion 232 and the busbar 2000.

In some embodiments, the overall height H7 of the sealing cover 230 is 0.8 mm, 1 mm, 2 mm, 3 mm, 4 mm, 5 mm, or the like.

In some embodiments, as shown in FIG. 1, FIG. 7, and FIG. 8, a groove 2111 is provided on an inner wall of the electrolyte solution filling channel 211, the groove 2111 extends to the end surface 251 of the terminal 250, a support surface 2112 is formed on a side wall of the groove 2111, the body 231 is supported on the support surface 2112, and the outer peripheral wall of the body 231 is welded to an inner peripheral wall of the groove 2111. This may also be understood as that the groove 2111 extending to the end surface 251 of the terminal 250 may alternatively be provided on the inner wall of the electrolyte solution filling channel 211, in addition to arranging the body 231 to include the blocking portion 2312 and the lap portion 2313 and arranging the lap portion 2313 on the end surface 251 of the terminal 250 to implement matching between the body 231 and the terminal 250 through welding.

The groove 2111 extends to the end surface 251 of the terminal 250 to implement communication between the groove 2111 and external space of the terminal 250 and ensure that the body 231 of the sealing cover 230 can be supported on a side wall of the groove 2111, so that at least part of the sealing cover 230 is arranged in the groove 2111. In addition, the outer peripheral wall of the body 231 is welded to the inner peripheral wall of the groove 2111, so that the sealing cover 230 can be matched with the terminal 250 through welding. In this way, the sealing cover 230 can be used to block the electrolyte solution filling channel 211, to prevent an external foreign object from entering the battery cell 1000 through the electrolyte solution filling channel 211 and also prevent an electrolyte solution in the battery cell 1000 from overflowing through the electrolyte solution filling channel 211, so as to ensure operation performance of the battery cell 1000.

Optionally, the outer peripheral wall of the body 231 is welded to the inner peripheral wall of the groove 2111 to implement matching between the sealing cover 230 and the terminal 250 and ensure connection quality.

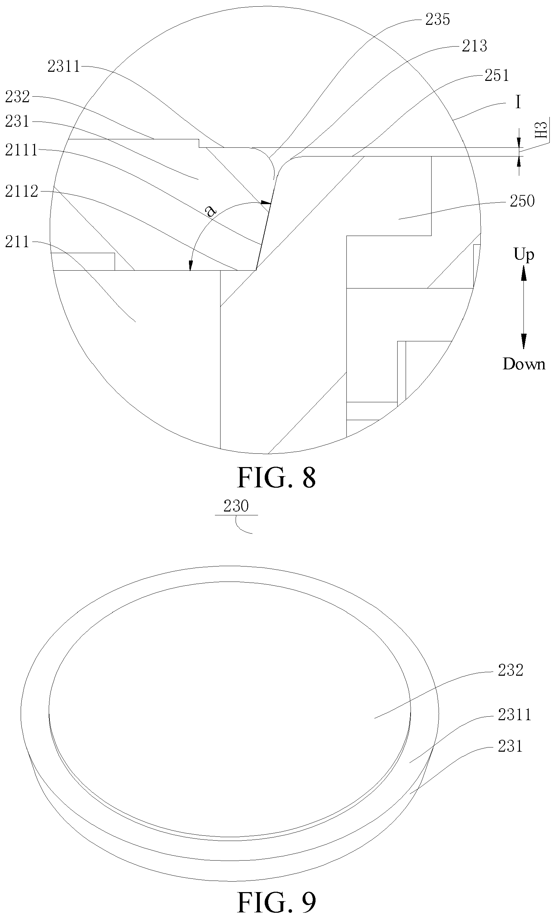

Optionally, as shown in FIG. 8, in a radial direction of the terminal 250, an outer peripheral wall of the connection protrusion 232 is located on a radial inner side of the outer peripheral wall of the body 231. In this way, the connection protrusion 232 can be arranged away from the terminal 250 to prevent the connection protrusion 232 from affecting welding between the outer peripheral wall of the body 231 and the inner peripheral wall of the groove 2111, so as to reduce difficulty of connecting the sealing cover 230 to the terminal 250.

In some embodiments, as shown in FIG. 8, the connection protrusion 232 is arranged spaced away from the outer peripheral wall of the body 231. In this way, the connection protrusion 232 is prevented from affecting welding between the outer peripheral wall of the body 231 and the inner peripheral wall of the groove 2111, and the welding seam 290 can be further prevented from being formed on the connection protrusion 232 during welding between the body 231 and the terminal 250, so as to ensure a contact area between the connection protrusion 232 and the busbar 2000 after the sealing cover 230 is welded to the terminal 250. This helps ensure quality and stability of a connection between the sealing cover 230 and the busbar 2000, and improves welding yield of the busbar 2000.

In some embodiments, a minimum spacing between the connection protrusion 232 and the outer peripheral wall of the body 231 is greater than or equal to half of a welding width-of-fusion between the outer peripheral wall of the body 231 and the inner peripheral wall of the groove 2111, and is less than the radius of the body 231. The minimum spacing between the connection protrusion 232 and the outer peripheral wall of the body 231 herein may be understood as H5 shown in FIG. 5. The welding width-of-fusion is a width of a melting region of the welding seam 290 during welding between the outer peripheral wall of the body 231 and the inner peripheral wall of the groove 2111. Because the outer peripheral wall the of body 231 is welded to the inner peripheral wall of the groove 2111, a part of the welding width-of-fusion is formed at a periphery of the connection protrusion 232 and on a surface of the terminal 250 after the welding is completed. The foregoing arrangement can prevent the welding seam 290 from being formed on the connection protrusion 232 during welding between the outer peripheral wall of the body 231 and the inner peripheral wall of the groove 2111, and can further ensure a width of the connection protrusion 232, so as to ensure quality of a connection between the sealing cover 230 and the busbar 2000.

In some embodiments, as shown in FIG. 8, a first chamfer 213 is provided between the groove 2111 and the end surface 251 of the terminal 250, a second chamfer 235 is provided between the outer peripheral wall of the body 231 and the third end surface 2311, the first chamfer 213 and the second chamfer 235 are provided spaced away, and solder is arranged between the first chamfer 213 and the second chamfer 235. This ensures quality of welding between the body 231 and the terminal 250, and improves sealing effect of the sealing cover 230.

In addition, the first chamfer 213 and the second chamfer 235 together can indicate an assembly direction of the sealing cover 230. This reduces difficulty of sealing by the sealing cover 230, improves assembly efficiency, and can further reduce difficulty of molding the sealing cover 230 and the terminal 250.

It should be noted that FIG. 8 shows both the first chamfer 213 and the second chamfer 235 formed as round chamfers, but in some other embodiments, the first chamfer 213 and the second chamfer 235 may alternatively be formed as beveled chamfers. This is not specifically limited herein.

In some embodiments, as shown in FIG. 8, the third end surface 2311 protrudes out of the end surface 251 of the terminal 250. This ensures that the connection protrusion 232 can protrude out of the terminal 250. In this way, solder can further flow between the outer peripheral wall of the body 231 and the inner peripheral wall of the groove 2111 under the action of gravity during welding between the outer peripheral wall of the body 231 and the inner peripheral wall of the groove 2111, so as to ensure quality of welding between the body 231 and the terminal 250.

In some embodiments, a spacing between the third end surface 2311 and the end surface 251 of the terminal 250 ranges from 0.05 mm to 1 mm. The spacing between the third end surface 2311 and the end surface 251 of the terminal 250 herein may be understood as H3 shown in FIG. 8. The foregoing arrangement ensures that the third end surface 2311 can protrude out of the end surface 251 of the terminal 250, and can further ensure that solder on the third end surface 2311 can effectively flow between the outer peripheral wall of the body 231 and the inner peripheral wall of the groove 2111. For example, the solder flows between the first chamfer 213 and the second chamfer 235. This reduces a mating gap between the body 231 and the terminal 250, improves welding yield, reduces a requirement for assembly accuracy, and improves process feasibility.

Certainly, in some other embodiments, the third end surface 2311 may alternatively be arranged to be flush with the end surface 251 of the terminal 250 when no chamfer is provided between the groove 2111 and the end surface 251 of the terminal 250 or between the outer peripheral wall of the body 231 and the third end surface 2311 (as shown in FIG. 1 and FIG. 5). A reason lies in that a contact area between the outer peripheral wall of the body 231 and the inner peripheral wall of the groove 2111 can be ensured when the terminal 250 and the sealing cover 230 are formed into the structures shown in FIG. 1 and FIG. 5.

In some other embodiments, the third end surface 2311 may alternatively be arranged to be flush with the end surface 251 of the terminal 250 when radii of the first chamfer 213 and the second chamfer 235 are less than 1/4 of a welding depth-of-fusion, where the welding depth-of-fusion is a depth by which a welded material is melted on a cross section of a welding joint. A reason lies in that a contact area between the outer peripheral wall of the body 231 and the inner peripheral wall of the groove 2111 is effectively ensured when the radii of the first chamfer 213 and the second chamfer 235 are less than 1/4 of the welding depth-of-fusion.

In some embodiments, as shown in FIG. 8, the inner peripheral wall of the groove 2111 obliquely extends in a direction away from a center of the electrolyte solution filling channel 211 relative to the support surface 2112, and the outer peripheral wall of the body 231 is matched with the inner peripheral wall of the groove 2111. The inner peripheral wall of the groove 2111 obliquely extends in a direction away from the center of the electrolyte solution filling channel 211 relative to the support surface 2112, so that an opening size of the groove 2111 can be increased. This reduces difficulty of matching between the outer peripheral wall of the body 231 and the inner peripheral wall of the groove 2111, and ensures that a partial structure of the body 231 can be effectively assembled into the electrolyte solution filling channel 211.

In addition, the outer peripheral wall of the body 231 is matched with the inner peripheral wall of the groove 2111, so that a contact area between the body 231 and the terminal 250 can be increased, to ensure quality of welding between the sealing cover 230 and the terminal 250 and seal the electrolyte solution filling channel 211 by using the sealing cover 230.

In some embodiments, as shown in FIG. 8, an included angle between the inner peripheral wall of the groove 2111 and the support surface 2112 is a, where 90° < a ≤ 150°. This can ensure that the inner peripheral wall of the groove 2111 can effectively obliquely extend in a direction away from the center of the electrolyte solution filling channel 211 relative to the support surface 2112, to improve performance of assembly between the sealing cover 230 and the groove 2111 and reduce assembly difficulty. In addition, this can further ensure a contact area between the outer peripheral wall of the body 231 and the inner peripheral wall of the groove 2111, to ensure quality of welding between the sealing cover 230 and the terminal 250.

In some embodiments, the included angle between the inner peripheral wall of the groove 2111 and the support surface 2112 is 100°, 110°, 120°, 130°, 140°, 150°, or the like.

A battery cell 1000 according to embodiments of the present disclosure is described below with reference to the drawings.

As shown in FIG. 14 and FIG. 15, a battery cell 1000 according to embodiments of the present disclosure includes a housing 300, an electrode core 320, a terminal assembly 200, and a collecting pan 100.

An accommodating cavity with an opening is formed in the housing 300, and the electrode core 320 is arranged in the accommodating cavity and has a tab. In this way, the electrode core 320 is arranged in the housing 300, so that the housing 300 can be used to protect the electrode core 320, to extend service life of the electrode core 320 and improve safety of using the electrode core 320.

The terminal assembly 200 is the foregoing terminal assembly 200. A specific structure of the terminal assembly 200 is not described in detail herein. The terminal assembly 200 is arranged at the opening.

The collecting pan 100 is arranged between the electrode core 320 and the terminal assembly 200, and is electrically connected to the tab and the terminal assembly 200 separately, to implement an electrical connection between the electrode core 320 and a terminal 250. This facilitates lead-out of a current of the electrode core 320 through the terminal 250, to ensure operation performance of the battery cell 1000.

In some embodiments, the collecting pan 100 is welded to the tab and the terminal 250 separately, so that an electrical connection can be formed between the tab and the terminal 250. This can further ensure strength of a connection between the tab and the terminal 250, reduce difficulty of connecting the tab to the terminal 250, and improve assembly efficiency and structural stability for the battery cell 1000.

It can be learned from the foregoing structure that, in the battery cell 1000 according to the embodiments of the present disclosure, the foregoing terminal assembly 200 is used, to ensure electrolyte solution filling effect for the battery cell 1000 and ensure operation performance of the battery cell 1000.

In some embodiments, the housing 300 is molded through stamping or welding, and the housing 300 is made of an aluminum material, a steel material, or the like.

In some embodiments, as shown in FIG. 1, the battery cell 1000 further includes a cover plate 210, and the terminal 250 is arranged through the cover plate 210. In this way, the cover plate 210 can be used to support the terminal 250, to improve position stability of the terminal 250 and ensure operation performance of the terminal 250.

In some embodiments, as shown in FIG. 1, FIG. 7, and FIG. 13, the battery cell 1000 further includes an insulating member 400. The insulating member 400 is arranged on the cover plate 210 and is located between the terminal 250 and the cover plate 210, so that the cover plate 210 is insulated and spaced away from the terminal 250. This avoids an electrical connection between the cover plate 210 and the terminal 250, to ensure operation performance of the battery cell 1000.

In some embodiments, as shown in FIG. 1, FIG. 7, and FIG. 13, the insulating member 400 includes an insulating piece 430 and a sealing ring 440, and the insulating piece 430 and the sealing ring 440 are arranged on two opposite sides of the cover plate 210. In this way, the insulating member 400 is arranged between the terminal 250 and the cover plate 210, so that the cover plate 210 is insulated and spaced away from the terminal 250, and difficulty of mounting the insulating member 400 and the cover plate 210 is reduced.

In some embodiments, the insulating piece 430 is arranged on an outer side of the cover plate 210, and the sealing ring 440 is arranged on an inner side of the cover plate 210. The insulating piece 430 is obtained through injection molding by using high-performance thermoplastic resin, for example, polyphenylene sulfide, to ensure insulation performance of the insulating piece 430, so that the cover plate 210 can be effectively insulated and spaced away from the terminal 250. The sealing ring 440 is made of fluorine rubber, ethylene propylene diene cell, or meltable polytetrafluoroethylene. This ensures insulation performance of the sealing ring 440, and can further enable the sealing ring 440 to have specific sealing performance, to provide a sealing function for the terminal 250 and avoid overflow of an electrolyte solution in the battery cell 1000.

In some embodiments, as shown in FIG. 1, FIG. 7 and FIG. 13, the battery cell 1000 further includes a buffer member 500. The buffer member 500 is arranged between the insulating member 400 and the terminal 250, to prevent the terminal 250 from causing damage to the insulating member 400 during molding, extend service life of the insulating member 400, and ensure insulation performance of the insulating member 400.

In addition, during molding of the terminal 250, the buffer member 500 can be further used to limit and support the terminal 250, to improve structural strength of the terminal 250 after molding and ensure position stability of the terminal 250, so as to improve position stability of the terminal 250 and ensure performance of the terminal 250.

In some embodiments, the buffer member 500 is obtained by molding an aluminum material through stamping. This reduces difficulty of molding the buffer member 500, and can further enable the buffer member 500 to have specific structural strength. In this way, the buffer member 500 can be used to limit and support the terminal 250, to improve structural strength of the terminal 250 after molding, prevent the terminal 250 from causing damage to the insulating member 400 during molding, and extend service life of the insulating member 400.

It should be noted that the foregoing aluminum material may be series 1 aluminum or aluminum of other series. This is not specifically limited herein.

In some embodiments, the battery cell 1000 further includes an explosion-proof valve. The explosion-proof valve is arranged on the cover plate 210. The explosion-proof valve is configured to break when pressure in the battery cell 1000 is large, to discharge the pressure in the battery cell 1000, so as to improve safety of using the battery cell 1000.

In some embodiments, as shown in FIG. 14, the battery cell 1000 further includes a protection piece 800. The protection piece 800 is arranged on an outer side of the explosion-proof valve to protect the explosion-proof valve. The protection piece 800 prevents an external foreign object from causing damage to the explosion-proof valve, so as to ensure performance of the explosion-proof valve.

In some embodiments, as shown in FIG. 1, FIG. 7, and FIG. 13, the battery cell 1000 further includes a top spacer 270. The top spacer 270 is made of a polypropylene material and is arranged on the other side of the cover plate 210, and a partial structure of the top spacer 270 is located between the terminal 250 and the cover plate 210. In this way, the top spacer 270 can be used to provide an insulation function for the terminal 250 and the cover plate 210, and the top spacer 270 can be further used to protect the explosion-proof valve, to prevent the electrode core 320 from causing damage to the explosion-proof valve and ensure performance of the explosion-proof valve.

In some embodiments, the collecting pan 100 includes a positive electrode collecting pan and a negative electrode collecting pan, the electrode core 320 includes a positive electrode tab and a negative electrode tab, the positive electrode collecting pan is electrically connected to the positive electrode tab of the electrode core 320, and the negative electrode collecting pan is electrically connected to the negative electrode tab of the electrode core 320, to ensure operation performance of the electrode core 320.

In some embodiments, as shown in FIG. 15 and FIG. 16, the positive electrode collecting pan includes a pan body 140. At least part of the pan body 140 protrudes in a direction toward the electrode core 320 to form, on the pan body 140, a first connection piece 110 protruding toward the terminal assembly 200 and a second connection piece 120 protruding toward the electrode core 320. The first connection piece 110 is electrically connected to the terminal 250, and the second connection piece 120 is electrically connected to the tab, to implement an electrical connection between the terminal 250 and the electrode core 320. This reduces difficulty of connecting the terminal 250 to the electrode core 320, and ensures quality of a connection between the terminal 250 and the electrode core 320.

In some embodiments, the positive electrode collecting pan is molded through stamping, to form, on the positive electrode collecting pan, the first connection piece 110 protruding toward the terminal assembly 200 and the second connection piece 120 protruding toward the electrode core 320. This reduces difficulty of molding the positive electrode collecting pan.

In addition, the positive electrode collecting pan is arranged to include the pan body 140, so that the positive electrode collecting pan can be formed into a single-layer structure to reduce space occupied by the positive electrode collecting pan and improve space utilization of the battery cell 1000. This can also shorten a current flow path, reduce impedance and heat production, ensure operation performance of the battery cell 1000, and improve safety of using the battery cell 1000.

In some embodiments, a thickness of the first connection piece 110 is greater than a thickness of the second connection piece 120, so that the thickness of the first connection piece 110 is large, and a thickness of a body part of the positive electrode collecting pan is large. In this way, the first connection piece 110 and the second connection piece 120 can be directly formed on the positive electrode collecting pan, to avoid fracture of the positive electrode collecting pan during molding. In addition, this can further avoid impact on the electrode core 320 during welding between the first connection piece 110 and the terminal 250, so as to extend service life of the electrode core 320.

In addition, the thickness of the first connection piece 110 is set to be greater than the thickness of the second connection piece 120, so that the thickness of the second connection piece 120 can be set to be small. This facilitates welding between the second connection piece 120 and the electrode core 320, and increases welding yield.

Optionally, as shown in FIG. 16, the thickness L1 of the second connection piece 120 ranges from 0.1 mm to 0.8 mm. When the thickness of the second connection piece 120 is small, structural strength of the second connection piece 120 is reduced, and consequently, the positive electrode collecting pan is highly susceptible to fracture, and service life of the positive electrode collecting pan is shortened. When the thickness of the second connection piece 120 is large, difficulty of welding the second connection piece 120 to the electrode core 320 increases.

Therefore, in the present disclosure, the thickness L1 of the second connection piece 120 is set to range from 0.1 mm to 0.8 mm. This avoids fracture of the positive electrode collecting pan, and can further facilitate welding between the second connection piece 120 and the electrode core 320 to increase welding yield.

In a specific example, the thickness of the second connection piece 120 is 0.1 mm, 0.2 mm, 0.3 mm, 0.4 mm, 0.5 mm, 0.6 mm, 0.7 mm, 0.8 mm, or the like.

Optionally, as shown in FIG. 16, the thickness of the first connection piece 110 is L2, where 0 mm < L2 - L1 < 0.5 mm. To be specific, the thickness of the first connection piece 110 is greater than the thickness of the second connection piece 120, and a difference between the thickness of the first connection piece 110 and the thickness of the second connection piece 120 is less than 0.5 mm, so that the thickness of the second connection piece 120 can be prevented from being excessively large. This avoids a problem that a partial structure of the pan body 140 cannot effectively protrude in a direction toward the electrode core 320 to form the second connection piece 120, reduces difficulty of molding the positive electrode collecting pan, and can further reduce a weight of the positive electrode collecting pan and reduce costs of producing the positive electrode collecting pan.

In a specific example, the thickness of the first connection piece 110 is 0.1 mm, 0.2 mm, 0.3 mm, 0.4 mm, 0.5 mm, or the like.

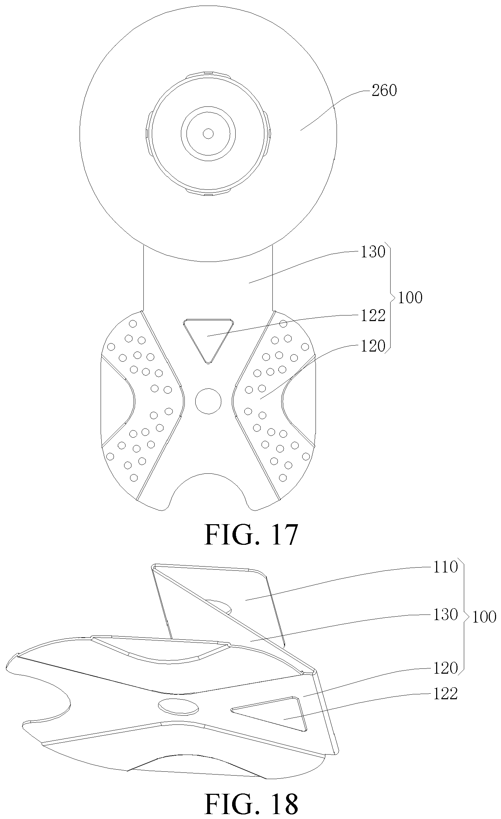

In some embodiments, as shown in FIG. 17 and FIG. 18, the negative electrode collecting pan includes a first connection piece 110, an intermediate member 130, and a second connection piece 120. The first connection piece 110, the intermediate member 130, and the second connection piece 120 are stacked along an axial direction of the electrode core 320. The first connection piece 110 is electrically connected to the terminal 250, and the second connection piece 120 is electrically connected to the tab. The axial direction of the electrode core 320 herein may also be understood as an up-down direction shown in FIG. 15. The first connection piece 110, the intermediate member 130, and the second connection piece 120 are stacked along the axial direction of the electrode core 320, so that the negative electrode collecting pan can be used to connect two mechanical parts (for example, the terminal 250 and the electrode core 320) arranged along the up-down direction, to reduce difficulty of connecting the terminal 250 and the electrode core 320 that are arranged spaced away along the up-down direction. This implements an electrical connection between the electrode core 320 and the terminal 250, to facilitate lead-out of a current of the electrode core 320 through the terminal 250 and ensure operation performance of the electrode core 320, in other words, ensure operation performance of the battery cell 1000.

In addition, the first connection piece 110, the intermediate member 130, and the second connection piece 120 are stacked along the axial direction of the electrode core 320, so that a size of the negative electrode collecting pan along a thickness direction can be further reduced, to reduce a size of the battery cell 1000 along an axial direction and reduce difficulty of assembling the battery cell 1000.

In some embodiments, during processing of the negative electrode collecting pan, the negative electrode collecting pan is first formed into a shape shown in FIG. 17, and then the negative electrode collecting pan is folded (as shown in FIG. 18) after the processing of the negative electrode collecting pan is completed, so that the first connection piece 110, the intermediate member 130, and the second connection piece 120 of the negative electrode collecting pan are stacked along the axial direction of the electrode core 320, and an electrical connection between the terminal 250 and the electrode core 320 can be implemented through the negative electrode collecting pan. This reduces difficulty of connecting the terminal 250 and the electrode core 320, reduces space occupied by the negative electrode collecting pan, and reduces difficulty of molding the negative electrode collecting pan.

In some embodiments, as shown in FIG. 15 and FIG. 17, the battery cell 1000 further includes a negative electrode cover plate 260. The negative electrode cover plate 260 and the cover plate 210 are arranged on two opposite sides of the electrode core 320. The negative electrode cover plate 260 is electrically connected to the negative electrode tab of the electrode core 320. This facilitates lead-out of a current of the electrode core 320 through the negative electrode cover plate 260, to ensure operation performance of the electrode core 320.

It should be noted that, according to the foregoing arrangement, the battery cell 1000 can adopt a single-layer/dual-layer collecting pan design. This helps reduce impedance and improve space utilization and process feasibility of the battery cell 1000.

In some embodiments, the positive electrode collecting pan is made of an aluminum material, and the negative electrode collecting pan is made of a copper material.

Certainly, in some other embodiments, a material of the negative electrode collecting pan is not limited to copper, and may alternatively be steel. When the battery cell 1000 is a sodium-ion battery, the negative electrode collecting pan may alternatively be made of an aluminum material. This is not specifically limited herein.

In some embodiments, as shown in FIG. 17 and FIG. 18, when the collecting pan 100 includes the first connection piece 110, the intermediate member 130, and the second connection piece 120, the second connection piece 120 further includes an identification region 122, and the identification region 122 is provided near a joint between the intermediate member 130 and the second connection piece 120. To be specific, the identification region 122 is provided near the joint between the intermediate member 130 and the second connection piece 120, and the identification region 122 helps an operator quickly determine a position of the joint between the intermediate member 130 and the second connection piece 120, to facilitate folding of the collecting pan 100 from the shape shown in FIG. 17 to a shape shown in FIG. 18. This reduces difficulty of molding the collecting pan 100 and ensures accuracy of a structure of the collecting pan 100 after molding, to avoid reducing an area of the second connection piece 120, so as to ensure a connection area between the collecting pan 100 and the electrode core 320 and improve operation performance of the battery cell 1000.

To be specific, in the present disclosure, the identification region 122 is provided, so that difficulty of molding the collecting pan 100 can be reduced, and a position at which the collecting pan 100 is to be folded can be further limited to ensure a connection area between the second connection piece 120 and the electrode core 320.

In some embodiments, as shown in FIG. 17 and FIG. 18, the identification region 122 is a through-hole passing through the second connection piece 120 or a groove provided on the second connection piece 120. To be specific, the identification region 122 may be formed into a through-hole passing through the second connection piece 120, or may be formed into a groove provided on the second connection piece 120. This is not specifically limited herein, provided that an operator can directly observe a position of the identification region 122 to determine, based on the identification region 122, a position at which the collecting pan 100 is to be folded.

The figure shows the identification region 122 in a triangular shape. However, in some other embodiments, the identification region 122 may alternatively be in a rectangular shape, a circular shape, an elliptic shape, an irregular pattern, or the like.

In some embodiments, as shown in FIG. 14 and FIG. 15, the battery cell 1000 is a cylindrical battery, so that the battery cell 1000 has a high capacity, long cycle life, a wide range of applicable ambient temperature, and other advantages, to ensure operation performance of the battery cell 1000.

A battery assembly according to embodiments of the present disclosure is described below.

A battery assembly according to embodiments of the present disclosure includes multiple battery cells 1000.

The battery cell 1000 is the foregoing battery cell 1000, and a specific structure of the battery cell 1000 is not described in detail herein.

It can be learned from the foregoing structure that, in the battery assembly according to the embodiments of the present disclosure, the foregoing battery cell 1000 is used, to ensure operation performance of the battery assembly.

It should be noted that the battery assembly herein may be a battery module or a battery pack.

An electric device according to embodiments of the present disclosure is described below.

An electric device according to embodiments of the present disclosure includes a battery assembly.

The battery assembly is the foregoing battery assembly, and a specific structure of the battery assembly is not described in detail herein.

It can be learned from the foregoing structure that, in the electric device according to the embodiments of the present disclosure, the foregoing battery assembly is used, to ensure operation performance of the electric device.

It should be noted that the electric device herein may be but is not limited to a mobile phone, a tablet computer, a notebook computer, an electric toy, an electric tool, an electric bicycle, an electric vehicle, a ship, a spacecraft, and the like.

The electric toy may be a fixed or mobile electric toy, for example, a game console, an electric toy car, an electric toy ship, and an electric toy airplane. The spacecraft may include an airplane, a rocket, a space shuttle, a spaceship, and the like. The electric tool includes an electric metal cutting tool, an electric grinding tool, an electric assembly tool, and a railway-specific electric tool, for example, an electric drill, an electric grinder, an electric wrench, an electric screwdriver, an electric hammer, an electric impact drill, a concrete vibrator, and an electric planer.

In the descriptions of the present disclosure, it should be noted that, unless otherwise explicitly specified or defined, the terms "mounting" and "connection" should be understood in a broad sense. For example, the "connection" may be a fixed connection, a detachable connection, or an integral connection, or may be a mechanical connection or an electrical connection. Persons of ordinary skill in the art may understand specific meanings of the foregoing terms in the present disclosure based on specific circumstances.

Specific structures of other constituents, such as the electrode core 320, of the terminal assembly 200 of the battery cell 1000, the battery cell 1000, the battery assembly, and the electric device according to the embodiments of the present disclosure are known to persons of ordinary skill in the art. Details are not described herein.

In the descriptions of this specification, descriptions with reference to the term "embodiment", "example", or the like mean that a specific feature, structure, material, or characteristic described with reference to the embodiment or example is included in at least one embodiment or example of the present disclosure. In this specification, exemplary descriptions of the foregoing terms do not necessarily indicate a same embodiment or example. In addition, specific features, structures, materials, or characteristics in the descriptions may be combined in a proper manner in any one or more embodiments or examples.

Although the embodiments of the present disclosure are shown and described, persons of ordinary skill in the art can understand that various changes, modifications, replacements, and variations may be made to the embodiments without departing from the principle or essence of the present disclosure. The scope of the present disclosure is limited by the claims and their equivalents.

## Claims

1. A terminal assembly of a battery cell, comprising:
a terminal, an electrolyte solution filling channel being provided in the terminal, the electrolyte solution filling channel having an electrolyte solution outlet, the terminal comprising a protruding portion, the protruding portion being arranged around the electrolyte solution outlet, and a blocking channel in communication with the electrolyte solution filling channel being formed in the protruding portion.

2. The terminal assembly of the battery cell according to claim 1, wherein the terminal has a bottom plate and a side plate, the side plate is connected to a side of the bottom plate in a thickness direction and extends along a circumferential direction of the bottom plate to define the electrolyte solution filling channel, at least part of the bottom plate directly faces the electrolyte solution filling channel, the electrolyte solution outlet and the protruding portion are both provided on the bottom plate, and the bottom plate is adapted to electrically connect to an electrode core.

3. The terminal assembly of the battery cell according to claim 2, wherein the protruding portion is arranged on a first end surface that is of the bottom plate and that is away from the electrolyte solution filling channel.

4. The terminal assembly of the battery cell according to claim 2, wherein the protruding portion protrudes in a direction away from the electrolyte solution filling channel, and a protrusion height of the protruding portion ranges from 0.75 mm to 2 mm; and/or
a minimum thickness of the bottom plate ranges from 0.2 mm to 0.8 mm.

5. The terminal assembly of the battery cell according to claim 1, wherein a minimum diameter of the electrolyte solution outlet and/or the blocking channel ranges from 1 mm to 6 mm.

6. The terminal assembly of the battery cell according to claim 2, wherein the bottom plate has a second end surface facing the electrolyte solution filling channel, and a transition chamfer is provided between the electrolyte solution outlet and the second end surface,
preferably wherein the transition chamfer is a straight chamfer, an axial width of the straight chamfer ranges from 0.1 mm to 0.8 mm, and a radial width of the straight chamfer ranges from 0.05 mm to 0.8 mm;
or wherein the transition chamfer is a round chamfer, and a radius of the round chamfer ranges from 0.05 mm to 0.8 mm.

7. The terminal assembly of the battery cell according to any one of claims 1 to 6, further comprising a sealing nail, the sealing nail being arranged at the electrolyte solution outlet to block the electrolyte solution outlet.

8. The terminal assembly of the battery cell according to claim 2, further comprising a sealing cover, the sealing cover being arranged at an end that is of the side plate and that is away from the bottom plate to block an inlet of the electrolyte solution filling channel, preferably wherein the sealing cover comprises a body and a connection protrusion, the body is matched with the terminal through welding to block the inlet, a welding seam is formed at a joint between the body and the terminal, the connection protrusion is arranged on a third end surface that is of the body and that is away from the electrolyte solution filling channel along a thickness direction, the connection protrusion is adapted to connect to a busbar, and a protrusion height of the connection protrusion is greater than or equal to a maximum height of a part that is of the welding seam and that protrudes out of the third end surface, and more preferably wherein along the thickness direction of the body, the connection protrusion protrudes in a direction away from the electrolyte solution filling channel and protrudes out of the terminal; or wherein the body comprises a blocking portion and a lap portion that are connected to each other, the blocking portion is located in the electrolyte solution filling channel, the lap portion is arranged at a periphery of at least part of the blocking portion, and the lap portion is arranged on an end surface of the terminal and is welded to the terminal; and
along the thickness direction of the sealing cover, a part of an orthographic projection of the connection protrusion coincides with an orthographic projection of the lap portion.

9. The terminal assembly of the battery cell according to claim 8, wherein a thickness of the lap portion ranges from 0.3 mm to 1 mm, preferably wherein a thickness of the blocking portion is greater than the protrusion height of the connection protrusion.

10. The terminal assembly of the battery cell according to claim 8, wherein a groove is provided on an inner wall of the electrolyte solution filling channel, the groove extends to an end surface of the terminal, a support surface is formed on a side wall of the groove, the body is supported on the support surface, and the outer peripheral wall of the body is welded to an inner peripheral wall of the groove.

11. The terminal assembly of the battery cell according to claim 10, wherein the third end surface protrudes out of the end surface of the terminal, preferably wherein a spacing between the third end surface and the end surface of the terminal ranges from 0.05 mm to 1 mm.

12. The terminal assembly of the battery cell according to claim 10, wherein a first chamfer is provided between the groove and the end surface of the terminal, a second chamfer is provided between the outer peripheral wall of the body and the third end surface, the first chamfer and the second chamfer are provided spaced away, and solder is arranged between the first chamfer and the second chamfer.

13. A battery cell, comprising:
a housing, an accommodating cavity with an opening being formed in the housing;
an electrode core, the electrode core being arranged in the accommodating cavity and having a tab;
a terminal assembly, the terminal assembly being the terminal assembly according to any one of claims 1 to 12, and the terminal assembly being arranged at the opening; and
a collecting pan, the collecting pan being arranged between the electrode core and the terminal assembly and being electrically connected to the tab and the terminal assembly separately,
preferably wherein the battery cell is a cylindrical battery.

14. A battery assembly, comprising a plurality of battery cells according to claim 13.

15. An electric device, comprising the battery assembly according to claim 14.
